# EUROPEAN PATENT APPLICATION

(11) **EP 3 590 598 A1**
(43) Date of publication of application: **08.01.2020**
(21) Application number: 18760423.6
(22) Date of filing: 02.02.2018
(51) Int. Cl.: B01J 35/04, B01D 53/94, B01J 23/63, B01J 37/02, B01J 37/04, B01J 37/08, F01N 3/035

(54) **FILTER FOR EXHAUST GAS CLEANING AND METHOD FOR MANUFACTURING SAME**

(30) Priority: 03.03.2017 JP 2017040736
(71) Applicant: N.E. Chemcat Corporation, Tokyo 105-6124 (JP)
(72) Inventor: KAYADA, Yuto, Tokyo 105-6124 (JP); ANDO, Ryuji, Tokyo 105-6124 (JP)
(74) Representative: TBK
(86) International application number: PCT/JP2018/003665
(87) International publication number: WO 2018/159214

(57) **Abstract**

The present invention provides an exhaust gas purifying filter capable of efficiently burning and removing particulates captured by a partition wall, and a production method thereof. This exhaust gas purifying filter (CSF) of the present invention includes at least a honeycomb substrate having a porous partition wall configured to capture particulates (PM) such as soot in exhaust gas, and a catalyst carried by the honeycomb substrate and configured to burn and remove the particulates captured by the partition wall of the honeycomb substrate and deposited within cells, wherein the catalyst is carried concentrically in a shallow portion from the surface of the cell wall on the exhaust gas inflow side of the honeycomb substrate, and 65% or more of the total mass of the catalyst is present in a depth region from the surface of the cell wall of the honeycomb substrate up to 2/10a with reference to the wall thickness a of the partition wall.

## Description

### Technical Field

The present invention relates to an exhaust gas purifying filter and a method for producing the filter, more specifically, to an exhaust gas purifying filter carrying a catalyst capable of efficiently burning and removing particulate matter captured by a partition wall of a honeycomb substrate and deposited within cells, and to a production method that enables the filter to be obtained easily at low cost.

### Background Art

Exhaust gas emitted from lean-burn engines such as diesel engines and lean-burn gasoline engines contains various hazardous substances derived from fuel and combustion air. Examples of the hazardous substances include hydrocarbons (HC), soluble organic components and soot (which are referred to also as particulates or PM: Particulate Matter), carbon monoxide (CO), and nitrogen oxides (NOx). The emission of these toxic components is being regulated more strongly year by year.

Further, technology development for improving fuel efficiency is accelerated in diesel engines, and purification technology of PM such as soot and "particulates" of SOF (Soluble Organic Fraction) also affects the fuel efficiency. Therefore, a method of disposing a heat resistant filter (DPF: Diesel Patticulate Filter) in a flow path of exhaust gas to filter out particulates is practically used. The particulates filtered out are deposited on the filter, but when the particulates continuously increase, the output of engine is reduced due to an increase in back pressure following clogging of the filter. Therefore, it has been investigated to burn and remove the particulates deposited on the filter to regenerate the filter (see Patent Literature 1 and Patent Literature 2, for example).

In the systems of Patent Literatures 1 and 2, a DPF is disposed after an oxidation catalyst (DOC), and particulates deposited on the filter are burned and removed by utilizing NO₂ other than oxygen. Since the particulates can be burned from a low temperature by utilizing NO₂, the combustion and removal of the particulates are promoted, and the interval to the regeneration of the filter can be increased while an increase in pressure loss is suppressed. Among such filters configured to capture, burn, and remove particulates, DPFs coated with catalyst components are called CSFs (Catalyzed Soot Filters).

For CSFs, an expensive precious metal component such as platinum (Pt) and palladium (Pd) is used, in order to oxidize and purify soot and SOF in exhaust gas. For CSFs containing precious metals, there are a requirement to improve the performance of oxidizing and removing CO, HC, soot, etc., the performance of oxidizing NO, and the combustibility of unburned fuel such as light oil, so as to enhance the NOx removal performance, and a requirement to reduce the amount of precious metals to be used. These requirements are contradictory.

Therefore, Mende et al. proposed to dispose an oxidizer, a urea solution sprayer, and a specific selective reduction catalyst in this order in a flow path of exhaust gas emitted from a diesel engine, and further to dispose a catalyzed combustion filter (CSF) containing a precious metal component for burning (oxidizing) and removing after an oxidation catalyst (DOC), wherein the precious metal component of the CSF contains platinum and palladium with a proportion of platinum particles present alone adjusted to 3% or less (see Patent Literature 3).

This enabled hazardous substances to be purified with a comparatively simple configuration, while reducing the amount of precious metals that are catalyst components to be used.

Meanwhile, in an exhaust gas purifying filter, exhaust gas containing particulates PM is introduced from the inflow cell side and passes through a porous partition wall, and therefore PM is mostly captured on the inflow cell side of the partition wall. Also during combustion of PM captured by the partition wall, exhaust gas at high temperature is further introduced from the inflow cell side, and therefore the combustion of PM proceeds more actively on the inflow cell side than on the discharge cell side.

However, in a conventional exhaust gas purifying filter, a catalyst is uniformly carried throughout a partition wall of a honeycomb substrate, and therefore a large amount of catalyst is carried more than necessary on the discharge cell side of the partition wall, whereas the amount of catalyst could be insufficient in some cases on the inflow cell side of the partition wall where a large amount of catalyst is required. In such a conventional exhaust gas purifying filter, the PM combustion performance corresponding to the total amount of catalyst has not been achieved.

In contrast, an exhaust gas purifying filter configured so that a larger amount of catalyst for combustion of carbon materials is carried unevenly on the inflow cell side, instead of the catalyst being carried uniformly throughout the partition wall, and 80% or more of the total weight of catalyst is carried on the wall surface facing inflow cells and in a depth region from the wall surface to the half of the wall thickness has been proposed (see Patent Literature 4).

This literature says that PM can be efficiently burned and removed without increasing the total amount of catalyst to be carried, since PM can be sufficiently burned and removed on the inflow cell side where deposition of PM tends to occur and combustion of PM occurs more actively, while the amount of catalyst to be carried can be reduced on the discharge cell side where the influence on the combustion of PM is less.

However, in Patent Literature 4, a honeycomb substrate is immersed in a liquid such as water, thereby impregnating the pores of the partition wall of the honeycomb substrate with the liquid in a pretreatment step of liquid impregnation before immersion in a catalyst slurry in the production of the exhaust gas purifying filter, and the catalyst slurry is then attached to at least the surface of the partition wall of the honeycomb substrate. In this way, the pores are closed by the liquid such as water present in the pores on the discharge cell side of the partition wall. Therefore, infiltration of the catalyst slurry into the pores of the partition wall is suppressed, and the catalyst slurry is mostly attached onto the surface of the partition wall. However, in such catalyst preparation, infiltration of the catalyst slurry into the pores of the partition wall is suppressed. Therefore, it is difficult to allow the pores of the partition wall to carry the catalyst, the process is complicated and time-consuming, and the production cost is also increased.

Accordingly, there has been a demand for an exhaust gas purifying filter that can take advantage of the combustion performance of PM, while reducing the total amount of catalyst to be carried, and can be produced more efficiently.

### Citation List

### Patent Literature

Patent Literature 1: Japanese Patent Laid-Open No. 1-318715
Patent Literature 2: National Publication of International Patent Application No. 2002-502927
Patent Literature 3: Japanese Patent No. 5937067
Patent Literature 4: Japanese Patent Laid-Open No. 2013-158678

### Summary of Invention

### Technical Problem

In view of the aforementioned problems of the conventional art, it is an object of the present invention to provide an exhaust gas purifying filter carrying a catalyst capable of efficiently burning and removing particulate matter captured and deposited on a partition wall of a honeycomb substrate, and a production method that enables easy production of the aforementioned filter at low cost.

### Solution to Problem

As a result of diligent studies in order to solve the above problems of the conventional art, the inventor has found that it is effective to use a catalyst slurry obtained by grinding catalyst powder as a material in advance to have a predetermined particle size distribution, in order to allow a shallow portion from the surface of a cell wall (partition wall) on the exhaust gas inflow side of a honeycomb substrate that is configured to capture particulates (PM) such as soot from exhaust gas to concentrically carry a catalyst for burning and removing the particulates captured by the honeycomb substrate and deposited in cells, and further that the particulate matter captured and deposited on the partition wall of the honeycomb substrate can be efficiently burned and removed by using an exhaust gas purifying filter in which the catalyst is unevenly distributed on the exhaust gas inflow side, specifically, an exhaust gas purifying filter in which 65% or more of the total mass of the catalyst is present in a depth region from the surface of the cell wall up to 2/10a with reference to the wall thickness a of the partition wall, thereby accomplishing the present invention.

That is, the present invention provides various specific aspects shown below.

The first aspect of the present invention provides an exhaust gas purifying filter (CSF) comprising at least a honeycomb substrate having a porous partition wall configured to capture particulates (PM) in exhaust gas, and a catalyst carried by the honeycomb substrate and configured to burn and remove the particulates captured by the partition wall of the honeycomb substrate and deposited within cells, wherein the catalyst is carried concentrically in a shallow portion from the surface of the cell wall on the exhaust gas inflow side of the honeycomb substrate, and 65% or more of the total mass of the catalyst is present in a depth region from the surface of the cell wall of the honeycomb substrate up to 2/10a with reference to the wall thickness a of the partition wall.

The second aspect of the present invention provides the exhaust gas purifying filter according to the first aspect, wherein 90% or more of the total mass of the catalyst is present in the depth region from the surface of the cell wall of the honeycomb substrate up to 2/10a with reference to the wall thickness a of the partition wall.

The third aspect of the present invention provides the exhaust gas purifying filter according to the first or second aspect, wherein 95% or more of the total mass of the catalyst is present in a depth region from the surface of the cell wall of the honeycomb substrate up to 5/10a with reference to the wall thickness a of the partition wall.

The fourth aspect of the present invention provides the exhaust gas purifying filter according to any one of the first to third aspects, wherein the catalyst comprises: inorganic oxides containing one or more oxides selected from the group consisting of zirconium oxide and cerium oxide, and one or more oxides selected from the group consisting of lanthanum oxide, yttrium oxide, praseodymium oxide, and neodymium oxide; and a precious metal component containing Pt and/or Pd carried on the inorganic oxide.

The fifth aspect of the present invention provides the exhaust gas purifying filter according to the fourth aspect, wherein the inorganic oxides of the catalyst further contain aluminum oxide.

The sixth aspect of the present invention provides the exhaust gas purifying filter according to any one of the first to fifth aspects, wherein the exhaust gas purifying filter has a removal performance (PM removal performance) of 40% or more, the removal performance being measured when the honeycomb substrate is provided on a flow path of the exhaust gas to allow 7.5 g/L of the particulates per unit volume to deposit thereon and is maintained at 600°C for 10 minutes for combustion.

The seventh aspect of the present invention provides the exhaust gas purifying filter according to any one of the first to sixth aspects, wherein the honeycomb substrate has an average pore size of the partition wall within a range of 5 µm to 25 µm.

The eighth aspect of the present invention provides a method for producing an exhaust gas purifying filter (CSF) including at least a honeycomb substrate having a porous partition wall configured to capture particulates in exhaust gas, and a catalyst carried by the honeycomb substrate and configured to burn and remove the particulates captured by the partition wall of the honeycomb substrate and deposited within cells, the method comprising: a catalyst slurrying step of slurrying the catalyst to prepare a catalyst slurry and including any one of mixing and grinding treatments x) to z) below; a catalyst slurry applying step of supplying the catalyst slurry obtained from the end of the honeycomb substrate to the inside to apply the catalyst slurry inside the partition wall constituting the cells; and a heating step of heating the honeycomb substrate to which the catalyst slurry has been applied to allow the partition wall of the honeycomb substrate to carry the catalyst, wherein supposing that the average pore size of the partition wall is A µm, the catalyst slurry contains catalyst powder with a particle size at 90 vol% cumulative distribution (D90) of 0.5A µm to 0.92A µm at the end of the catalyst slurrying step: x) mixing material powder of the catalyst with an aqueous medium, followed by wet grinding; y) dry-grinding material powder of the catalyst, followed by mixing with an aqueous medium; and z) dry-grinding material powder of the catalyst, followed by mixing with an aqueous medium and further wet grinding.

The ninth aspect of the present invention provides the method for producing an exhaust gas purifying filter according to the eighth aspect, wherein the catalyst powder has a particle size distribution with a particle size (D50) at 50 vol% cumulative distribution of 0.15A µm to 0.35A µm at the end of the catalyst slurrying step.

The tenth aspect of the present invention provides the method for producing an exhaust gas purifying filter according to the eighth or ninth aspect, wherein the honeycomb substrate has an average pore size of the partition wall within a range of 5 µm to 25 µm.

### Advantageous Effects of Invention

In the exhaust gas purifying filter of the present invention, the catalyst for burning and removing particulates is not carried uniformly throughout the partition wall but is carried concentrically in the shallow portion from the surface of the cell wall (partition wall) on the exhaust gas inflow side of the honeycomb substrate. Therefore, PM can be burned and removed efficiently to achieve a high PM removal performance. Further, it is also possible to enhance CO and HC removal performances by changing the catalyst composition.

Since the amount of expensive precious metals to be used is reduced, the exhaust gas purifying filter of the present invention can be produced and supplied stably by a comparatively easy process at low cost.

### Brief Description of Drawings

[Figure 1] Figure 1 is an explanatory diagram schematically illustrating the configuration of an exhaust gas purifying filter (CSF) of the present invention.
[Figure 2] Figure 2 is an explanatory diagram illustrating an enlarged vertical section at the center of the exhaust gas purifying filter (CSF) of the present invention.

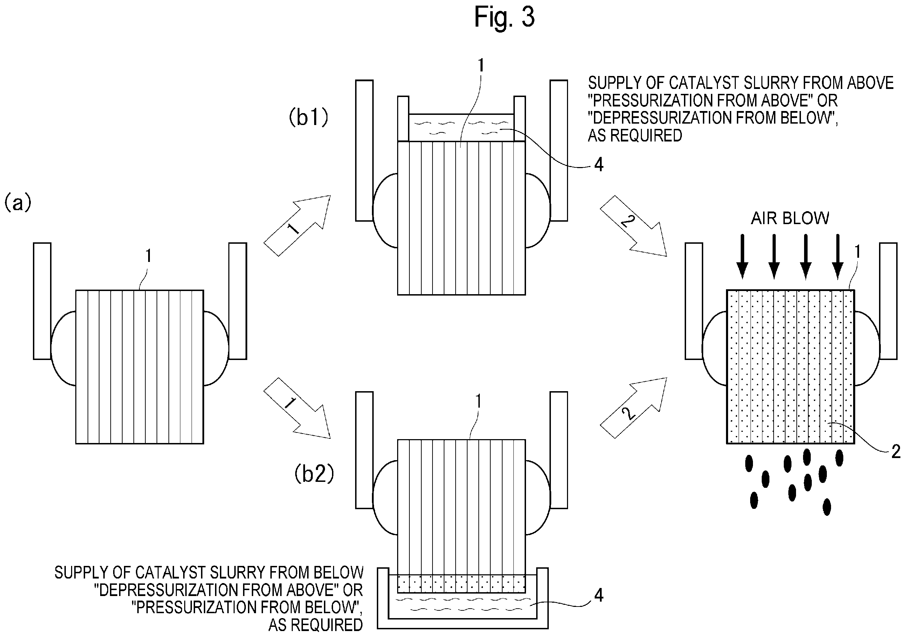

[Figure 3] Figure 3 is an explanatory diagram schematically illustrating a process of producing the exhaust gas purifying filter (CSF) of the present invention by a washcoating method.
[Figure 4] Figure 4 is a graph integrating amounts of catalyst from the wall surface on the exhaust gas inflow side to the wall surface on the exhaust gas outflow side over the catalyst distribution within the partition wall of the exhaust gas purifying filter.
[Figure 5] Figure 5 is a graph showing PM removal performances in an exhaust gas purification test for a bench diesel engine using exhaust gas purifying filters (CSFs).
[Figure 6] Figure 6 is a graph showing CO removal performances in an exhaust gas purification test for a bench diesel engine using exhaust gas purifying filters (CSFs).
[Figure 7] Figure 7 is a graph showing THC removal performances in an exhaust gas purification test for a bench diesel engine using exhaust gas purifying filters (CSFs).
[Figure 8] Figure 8 is an explanatory diagram schematically illustrating a configuration incorporating the exhaust gas purifying filter (CSF) of the present invention into an exhaust system of a diesel engine.

### Description of Embodiments

Hereinafter, embodiments of the present invention will be described in detail. The following embodiments are shown as examples for describing the present invention, and the present invention is not limited to these embodiments. In this description, the expression of a numerical range "1 to 100", for example, includes both the upper limit "1" and the lower limit "100". Further, the same applies to the expressions of other numerical ranges. Further, the case of applying the exhaust gas purifying filter of the present invention to a diesel vehicle will be described below in detail, but the present invention is, of course, effective for purifying exhaust gas from engines used for gasoline cars and various power sources such as power generators.

### 1. Exhaust gas purifying filter (CSF)

The exhaust gas purifying filter (CSF) of this embodiment is a catalyzed combustion filter including at least a honeycomb substrate having a porous partition wall configured to capture particulates (PM) such as soot in exhaust gas emitted from a diesel engine, and a catalyst, carried by the honeycomb substrate, for burning (oxidizing) and removing the particulates captured by the partition wall of the honeycomb substrate and deposited in cells. The catalyst used herein is carried concentrically in a shallow portion from the surface of the cell wall (partition wall) on the exhaust gas inflow side of the honeycomb substrate, and 65% or more of the total mass of the catalyst is present in a depth region from the surface of the partition wall facing exhaust gas inflow cells up to 2/10a with reference to the wall thickness a (which will be hereinafter referred to as "region on the inflow cell side").

### (Structure to carry catalyst)

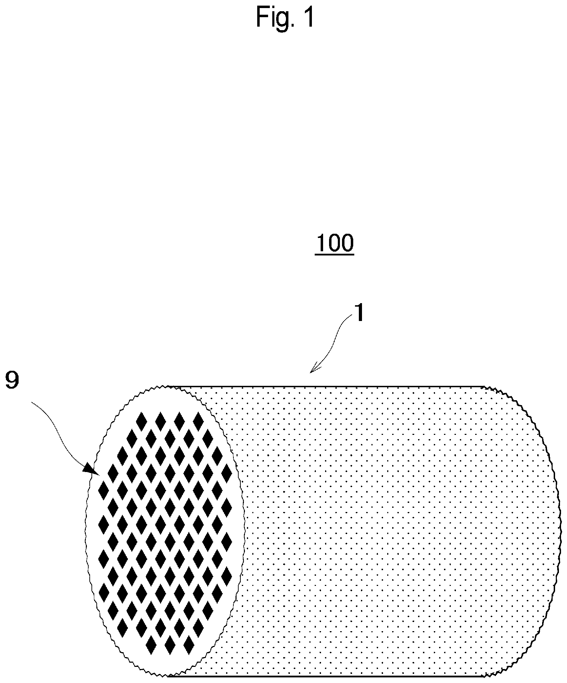

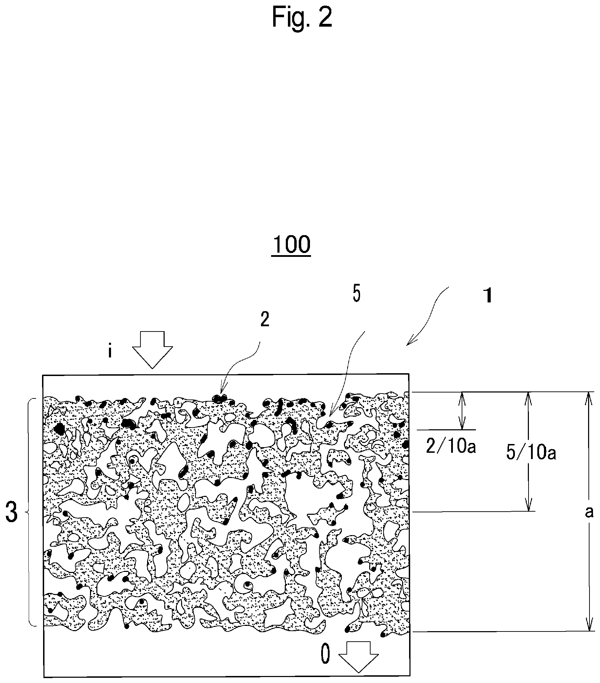

Figure 1 schematically shows the appearance of an exhaust gas purifying filter (CSF) 100 of this embodiment. Further, Figure 2 is a vertical section substantially at the center in the axis direction of the exhaust gas purifying filter 100 shown in Figure 1, showing an enlarged view of a main part of a partition wall 3 (cell partition wall) carrying a catalyst 2.

Since exhaust gas containing PM is introduced from the side of exhaust gas inflow cells 9 of the exhaust gas purifying filter (CSF) 100 and passes through the porous partition wall 3, as shown in Figure 1, PM is mostly captured on the inflow cell side of the partition wall 3. Further, since exhaust gas at high temperature is introduced from the inflow cell side also during the combustion of PM captured by the partition wall 3, the combustion of PM proceeds more actively on the inflow cell side than on the discharge cell side.

As the catalyst 2 used in this embodiment, various known catalysts can be used, and the type thereof is not specifically limited. Preferable examples of the catalyst 2 include composite catalyst particles containing a precious metal component and inorganic oxides carrying the precious metal component. Specifically, composite catalyst particles in which a precious metal component containing Pt or Pd is carried by inorganic oxides containing one or more oxides selected from zirconium oxide and cerium oxide and one or more oxides selected from lanthanum oxide, yttrium oxide, praseodymium oxide, and neodymium oxide are suitably used therefor. The inorganic oxides of the catalyst can further contain aluminum oxide.

In the exhaust gas purifying filter (CSF) 100 of this embodiment, the structure of a honeycomb substrate 1 carrying the catalyst 2 can be drawn as in Figure 2 based on a SEM image of a vertical section of the partition wall 3. A lot of pores 5 are formed in the porous partition wall 3 of the honeycomb substrate 1 used herein, and in the partition wall 3 in which the pores 5 are formed, the aforementioned catalyst 2 is carried concentrically in a shallow portion from the exhaust gas inflow side i (inlet of the DPF wall) toward the exhaust gas outflow side o (outlet of the DPF wall).

Here, the shallow portion means a depth region within 5/10a which is a half of the wall thickness a of the partition wall 3 of the honeycomb substrate 1 from the wall surface on the exhaust gas inflow side i (inlet of the DPF wall), particularly, a depth region within 2/10a.

Further, the proportion of the amount of catalyst (the mass of catalyst) carried in the aforementioned shallow portion with respect to the total mass of the catalyst 2 carried by the honeycomb substrate 1 can be investigated using a Scanning Electron Microscope (SEM). In this description, the proportion of the amount of catalyst carried in the shallow portion is calculated by dividing the partition wall 3 in a SEM image of a section of the partition wall 3 carrying the catalyst 2 into 10 equal parts from the exhaust gas inflow side to the exhaust gas outflow side and integrating the areas where the catalyst 2 is present up to a predetermined depth region.

In the exhaust gas purifying filter 100 of this embodiment, 65% or more of the total mass of the catalyst 2 carried by the honeycomb substrate 1 is present in a depth region from the surface of the partition wall 3 facing exhaust gas inflow cells up to 2/10a with reference to the wall thickness a, and therefore PM can be sufficiently burned and removed on the exhaust gas inflow cell side where deposition of PM tends to occur and combustion of PM occurs more actively. That is, while a comparatively large amount of PM deposited on the exhaust gas inflow cell side can be efficiently purified at a shallow position of the partition wall 3, the amount of the catalyst 2 to be carried is relatively reduced on the exhaust gas discharge cell side where the influence on the combustion of PM is less. Therefore, PM can be efficiently burned and removed without increasing the total amount of the catalyst 2 to be carried.

Actually, a PM removal performance of 40% or more is achieved, the PM removal performance being measured when the honeycomb substrate 1 carrying the catalyst 2 in which 95% or more of the total mass of the catalyst 2 carried by the honeycomb substrate 1 is carried in a depth region from the surface of the partition wall 3 facing exhaust gas inflow cells up to 5/10a with reference to the wall thickness a is provided on a flow path of the exhaust gas to allow 7.5 g/L of PM per unit volume to deposit thereon and is maintained at 600°C for 10 minutes for combustion.

In contrast, when the catalyst is carried uniformly throughout the partition wall of the honeycomb substrate, as in conventional exhaust gas purifying filters, the amount of catalyst is insufficient on the exhaust gas inflow cell side of the partition wall where a large amount of catalyst is required, and the total amount of catalyst to be carried cannot be fully utilized for the combustion performance of PM, even if a large amount of catalyst is carried more than necessary on the exhaust gas discharge cell side of the partition wall.

### (Precious metal component)

The CSF of this embodiment contains at least any one or both of platinum (Pt) and palladium (Pd) as a precious metal component of the catalyst 2. It is preferable to contain both of Pt and Pd.

When the catalyst 2 contains such a precious metal component, higher NO oxidation performance can be exhibited, thereby increasing the NO₂ concentration in exhaust gas and enabling the NOx reduction and purification capacity to be improved when an SCR catalyst is provided after the CSF.

Further, suppression of volatilization of the Pt component at high temperature can be expected by addition of the Pd component to the Pt component. The content ratio of platinum to palladium is not specifically limited but is preferably 1:1 to 11:4, more preferably 3:2 to 11:4, in terms of mass, for achieving high PM combustibility and high oxidation activity and suppressing the volatilization of platinum.

In the CSF of this embodiment, the amount of platinum to be carried is preferably 0.05 to 2.0 g/L, more preferably 0.1 to 1.5 g/L, in terms of metal.

### (Inorganic oxides)

In this embodiment, composite catalyst particles in which the aforementioned precious metal component is carried by inorganic oxides such as zirconium oxide and cerium oxide are used as the catalyst 2, and the composite catalyst particles are carried by the honeycomb substrate 1 of wall flow type that has been made porous.

As the inorganic oxides serving as a base material carrying the precious metal component, catalyst materials known in the field of exhaust gas purifying catalysts can be used, and the type thereof is not specifically limited. As the inorganic oxides used herein, porous inorganic oxides having a high heat resistance and a large specific surface area so that the precious metal component can be highly dispersed stably are preferable.

Preferable examples of the inorganic oxides include zirconium oxide, cerium oxide, lanthanum oxide, yttrium oxide, praseodymium oxide, and neodymium oxide, but there is no specific limitation to these examples. The inorganic oxides to be used can be appropriately selected corresponding to the desired performance, and one of them can be used alone, or two or more of them can be used in any combination at any ratio. For example, use of inorganic oxides containing one or more oxides selected from the group consisting of zirconium oxide and cerium oxide, and one or more oxides selected from the group consisting of lanthanum oxide, yttrium oxide, praseodymium oxide, and neodymium oxide tends to enhance the heat resistance.

Aluminum oxide (alumina) can be further contained as the inorganic oxides. Examples of alumina materials include γ-alumina, β-alumina, δ-alumina, η-alumina, and θ-alumina, but there is no specific limitation to these examples. Among these, γ-alumina is preferable.

The pore size (mode diameter; the same applies to the following) of the inorganic oxides is not limited but is preferably 5 to 150 nm, more preferably 12 to 60 nm. For achieving high gas diffusivity and high dispersibility of metals or the like, the pore size is preferably 12 to 120 nm, more preferably 12 to 80 nm, further preferably 12 to 60 nm, in the case of using alumina as an inorganic oxide.

The BET specific surface area (by BET; the same applies to the following) of the inorganic oxides such as alumina is not specifically limited, but is preferably 50 to 300 m²/g, more preferably 100 to 200 m²/g, for maintaining the gas diffusivity and the dispersibility of metals or the like.

### (Honeycomb substrate)

In this embodiment, a carrier having an integrated structure, that is, the honeycomb substrate 1 is used for the CSF, in order to carry a catalyst containing inorganic oxides carrying a precious metal component with good dispersibility. Carriers known in this industry can be used as the honeycomb substrate 1, and there is no limitation. As a material constituting the honeycomb substrate 1, silica, alumina, silicon carbide, cordierite, and the like, for example, can be used.

As the honeycomb substrate 1, a carrier of wall flow type integrating through holes to form a honeycomb shape with through hole openings (cell openings) on one side open and openings on the other side closed can be used. In the carrier of wall flow type, the cell partition wall (partition wall 3) of the through holes has a porous structure. Particulates penetrate into the through holes through the through hole openings together with exhaust gas, the exhaust gas passes through the porous cell partition wall to be emitted backward, and the particulates are deposited within the closed through holes. The particulates thus deposited are burned and removed as described above, thereby regenerating the CSF, so that the CSF can capture particulates out of exhaust gas again.

Any overall shape of the honeycomb substrate 1 can be appropriately selected corresponding to the structure of the exhaust system to be applied, such as a circular cylindrical shape, a square pillar shape, and a hexagonal columnar shape. Further, the cell density, that is, the number of opening holes is appropriately determined in consideration of the type of exhaust gas to be treated, the gas flow rate, the pressure loss, the removal efficiency, and the like, but generally is preferably about 100 to 1500, more preferably 100 to 900, particularly preferably 200 to 500, per 1 inch² (6.45 cm²), in applications for purifying exhaust gas of diesel vehicles.

When the cell density per 1 inch² (6.45 cm²) is 100 or more, the contact area between the exhaust gas and the catalyst can be ensured, and a sufficient function of purifying exhaust gas can be obtained, whereas when the cell density per 1 inch² (6.45 cm²) is 1500 or less, a significant pressure loss of exhaust gas does not occur, and the performance of the internal combustion engine is not impaired. The porosity of the honeycomb substrate 1 is generally measured using a mercury porosimeter, and the range thereof is not limited, but is, for example, 40 to 70%, preferably 45 to 65%.

Further, the thickness of the cell partition wall (partition wall 3) of the honeycomb substrate 1 can be appropriately set corresponding to the desired performance and is not specifically limited but is preferably 2 to 16 mil (milli-inch: 0.05 to 0.4 mm), more preferably 3 to 12 mil (0.076 to 0.3 mm). In the honeycomb substrate used in this embodiment, the average pore size of the partition wall 3 falls within the range of 5 µm to 25 µm. For reducing the pressure loss and enhancing the PM removal efficiency, the average pore size of the partition wall 3 preferably falls within the range of 10 µm to 20 µm.

Examples of such a honeycomb substrate 1 include a substrate (pore size: 14.5 µm) according to Example 1 of Japanese Patent Application Laid-Open No. 2013-158678, a substrate (pore size: 22 µm) according to Example 1 of National Publication of International Patent Application No. 2016-500566, and a substrate (pore size: 14 µm) according to Example 4 of the same publication.

Further, as commercially available substrates, a cordierite substrate (available from NGK Insulators, Ltd.; porosity: 54, 60%; and cell structure: 12 mil/200 cpsi and 12 mil/300 cpsi), a silicon carbide substrate (available from NGK Insulators, Ltd.; porosity: 46% to 60%; and cell structure: 12 mil/300 cpsi), and the like can be used.

For achieving high dispersibility of precious metals and low pressure loss, the amount of the catalyst 2 to be carried (the coating amount) on the honeycomb substrate 1 is preferably 3 to 100 g/L, in terms of the amount of catalyst per unit volume of the honeycomb substrate 1. Further, the coating amount of the catalyst 2 is more preferably 5 to 50 g/L, particularly preferably 10 to 30 g/L.

### 2. Method for preparing catalyst

The method for producing an exhaust gas purifying filter of this embodiment is a method for producing an exhaust gas purifying filter 1 (CSF) including at least a honeycomb substrate 1 having a porous partition wall 3 configured to capture particulates such as soot in exhaust gas, and a catalyst carried by the honeycomb substrate 1 for burning and removing the particulates captured by the partition wall 3 of the honeycomb substrate 1 and deposited within cells, the method comprising: a catalyst slurrying step of slurrying the catalyst 2 to prepare a catalyst slurry 4 and including any one of mixing and grinding treatments x) to z) below; a catalyst slurry applying step of supplying the catalyst slurry 4 obtained from the end of the honeycomb substrate 1 to the inside to apply the catalyst slurry 4 inside the partition wall 3 constituting the cells; and a heating step of heating the honeycomb substrate 1 to which the catalyst slurry 4 has been applied to allow the partition wall 3 of the honeycomb substrate 1 to carry the catalyst 2: x) mixing material powder of the catalyst 2 with an aqueous medium, followed by wet grinding; y) dry-grinding material powder of the catalyst 2, followed by mixing with an aqueous medium; and z) dry-grinding material powder of the catalyst 2, followed by mixing with an aqueous medium and further wet grinding.

Here, the aforementioned method for producing an exhaust gas purifying filter is characterized in that, supposing that the average pore size of the partition wall 3 is A µm, the catalyst slurry 4 contains catalyst powder having a particle size distribution with a particle size at 90 vol% cumulative distribution (D90) of 0.5A µm to 0.92A µm at the end of the catalyst slurrying step. The catalyst slurry 4 containing catalyst powder having such a particle size distribution can be easily prepared by performing any one of the mixing and grinding treatments x) to z) above on the catalyst slurry 4, corresponding to the particle size of the catalyst powder to be used.

In the aforementioned production method, a washcoating method known in this industry including the catalyst slurrying step, the catalyst slurry applying step, and the heating step is applied to allow the honeycomb substrate 1 to carry the catalyst 2.

In the washcoating method, a catalyst material and a honeycomb substrate are first prepared in the catalyst slurrying step, additives such as binders and surfactants are mixed, as required, to the catalyst material together with an aqueous medium to prepare the catalyst slurry 4 (slurry mixture), and the catalyst slurry 4 is applied to the honeycomb substrate 1 in the catalyst slurry applying step, followed by drying and firing in the heating step, to form a catalyst layer.

### (Catalyst slurrying step)

This step is a catalyst slurrying step comprising any one of mixing and grinding treatments x) to z) below. In this description, the catalyst slurry 4 is a concept including not only a slurry that contains catalyst powder after firing obtained by firing the material powder of the catalyst 2 but also a slurry that contains the material powder of the catalyst 2 before firing (precursor powder of catalyst) and is to be fired after being applied to the honeycomb substrate 1 so as to serve as the catalyst 2.

x) Mixing material powder of the catalyst with an aqueous medium, followed by wet grinding; y) dry-grinding material powder of the catalyst, followed by mixing with an aqueous medium; and z) dry-grinding material powder of the catalyst, followed by mixing with an aqueous medium and further wet grinding.

In wet grinding x), the catalyst material is mixed with water or a solvent (aqueous medium) obtained by adding a water-soluble organic solvent to water at a predetermined ratio, followed by grinding operation using a wet grinding device, to obtain a slurry mixture. As the wet grinding device, a planetary mill, a ball mill, a medium stirring mill, a jet mill, or the like can be used. Further, use of small-diameter grinding balls or ceramic grinding balls such as stainless steel in grinding with a ball mill or a medium stirring mill enables micronization of the catalyst material.

Further, in dry grinding y), the catalyst material is ground using a dry grinding device, and water or a solvent (aqueous medium) obtained by adding a water-soluble organic solvent to water is mixed with the ground product obtained at a predetermined ratio, to obtain a slurry mixture. As the dry grinding device, a jet mill using an inert gas and the like can be used. In grinding by the jet mill, micronization can be performed in an inert gas or by introducing 5 vol% or less of oxygen into the inert gas.

Further, z) is a combination of the aforementioned operations, wherein wet grinding x) is performed after dry grinding y). In both cases, the aqueous medium may be used in an amount such that the catalyst components can be uniformly dispersed in the slurry. In this embodiment, treatment including wet grinding using a ball mill or the like is preferable.

The catalyst material contains at least a precious metal component containing platinum and inorganic oxides that serve as a carrier, and the precious metal components can be carried by the inorganic oxides in advance. The inorganic oxides are impregnated with the precious metal catalyst component, followed by firing, as required, and is mixed in an aqueous medium, to prepare the catalyst slurry 4.

In the case where the precious metal component is carried by the inorganic oxides in advance, a known method can be appropriately employed. An example thereof is shown as follows.

First, compounds such as nitrate, carbonate, acetate, and chloride are prepared as raw materials of the precious metal component. Specifically, examples of the starting salt of platinum include an ethanolamine solution of acid of platinum(IV) hydroxide, tetraammineplatinum(II) acetate, tetraammineplatinum(II) carbonate, tetraammineplatinum(II) nitrate, a nitrate solution of acid of platinum(IV) hydroxide, platinum nitrate, dinitrodiamine platinum nitrate, and acid of platinum(IV) chloride. Further, examples of the starting salt of palladium include tetraamminepalladium(II) acetate, tetraamminepalladium(II) carbonate, tetraamminepalladium(II) nitrate, dinitrodiamine palladium, palladium nitrate, and palladium chloride.

Next, an aqueous solution containing such raw materials of the precious metal component is prepared, and the aqueous solution is mixed with the inorganic oxides, followed by firing at 300 to 1200°C, as needed. Other than the aforementioned components, a known catalyst material may be mixed as a binder or the like.

Further, examples of materials of the inorganic oxides include one or more oxides selected from the group consisting of zirconium oxide and cerium oxide, and one or more oxides selected from the group consisting of lanthanum oxide, yttrium oxide, praseodymium oxide, and neodymium oxide. Other than above, examples thereof include alumina, silica, titania, silica-alumina, alkali metal materials, alkaline earth metal materials, silver, and silver salt. As required, a dispersant and a pH adjuster can be used in combination.

Among lanthanum oxide, yttrium oxide, praseodymium oxide, and neodymium oxide, a combination of lanthanum oxide and yttrium oxide is preferable.

Specifically, a composition of the catalyst 2 containing 0.1 to 10 mass% of Pt, 0.1 to 5 mass% of Pd, 20 to 60 mass% of cerium oxide, 20 to 60 mass% of zirconium oxide, 1 to 10 mass% of lanthanum oxide, and 1 to 10 mass% of yttrium oxide is preferable.

Further addition of aluminum oxide to zirconium oxide and cerium oxide tends to improve the dispersibility of Pt and Pd, and the removal performances of CO and HC that are exhaust gas components, in addition to the PM burning and removing efficiency. Therefore, in the case of a catalyst to which aluminum oxide is further added, a composition containing 0.1 to 10 mass% of Pt, 0.1 to 5 mass% of Pd, 10 to 50 mass% of cerium oxide, 10 to 50 mass% of zirconium oxide, 20 to 40 mass% of aluminum oxide, 1 to 10 mass% of lanthanum oxide, and 1 to 10 mass% of yttrium oxide is preferable.

In the aforementioned production method, it is important that, supposing that the average pore size of the partition wall 3 is A µm, the catalyst powder in the catalyst slurry 4 be ground so as to have a particle size at 90 vol% cumulative distribution (D90) of 0.5A µm to 0.92A µm at the end of the catalyst slurrying step. Since the catalyst 2 can be carried concentrically in a shallow region of the partition wall 3, the catalyst powder at that time is ground so as to have a particle size (D90) of preferably 0.60A µm to 0.92A µm, more preferably 0.80A µm to 0.92A µm.

In the catalyst slurrying step, the catalyst material is mixed with the aqueous medium, but the amount of the aqueous medium may be appropriately determined depending on the type of the catalyst material, the grinding device, and the like. For example, in the case of grinding the catalyst slurry 4 containing a zirconium carrier as an inorganic oxide using a ball mill, the amount of the aqueous medium is preferably adjusted to 200 to 500 parts by mass with respect to 100 parts by mass of the catalyst material. More preferably, the amount of the aqueous medium is adjusted to 250 to 400 parts by mass with respect to 100 parts by mass of the catalyst material.

The mixing device is not specifically limited, and general mixers can be used. Further, the mixing time also needs only to allow the catalyst material to be sufficiently dispersed and is generally 1 minute to 30 minutes, preferably 3 minutes to 20 minutes.

Further, the grinding time depends also on the type and the amount of the catalyst material to be used, the type of the device to be used, and the operational conditions but can be, for example, 5 to 110 minutes, preferably 10 to 100 minutes, more preferably 20 to 60 minutes. Within such a range, the catalyst powder can be ground to a target value of the particle size at 90 vol% cumulative distribution (D90), and the productivity is also high.

Generally, the grinding device is operated in wet grinding x) or dry grinding y) above so as to achieve a value less than the upper limit of a target value that is a particle size at 90 vol% cumulative distribution (D90). After primary grinding, the catalyst powder obtained is sampled to measure the particle size (D90) and determine whether or not grinding can be ended. In the case where the particle size (D90) is larger than the target value, the catalyst powder may be further ground by continuously operating the device as in x) and z).

In the honeycomb substrate 1 used herein, the average pore size of the partition wall 3 preferably falls within the range of 5 µm to 25 µm. Use of such a honeycomb substrate 1 further facilitates allowing the shallow portion from the surface of the cell wall (the partition wall 3) on the exhaust gas inflow side of the honeycomb substrate 1 to concentrically carry the catalyst 2. Further, it is more preferable that the average pore size of the partition wall 3 fall within the range of 10 µm to 20 µm, for suppressing the pressure loss and further enhancing the PM removal efficiency.

As a method for grinding the catalyst powder so that, supposing that the average pore size of the partition wall 3 of the honeycomb substrate 1 is A µm, the particle size (D90) is 0.5A µm to 0.92A µm, a known method can be employed. For example, the catalyst powder can be mixed with an aqueous medium such as water, followed by wet grinding using a grinding device such as a ball mill.

Supposing that the average pore size of the partition wall 3 of the honeycomb substrate 1 is A µm, a particle size (D90) of the catalyst powder to be obtained of 0.5A µm or more does not allow an excessive increase of fine catalyst particles that pass through the partition wall 3 of the honeycomb substrate 1 in the subsequent slurry applying step and allow a depth region from the surface of the partition wall 3 facing the exhaust gas inflow cell side up to 2/10a to carry 65% or more of the catalyst powder, and further facilitates allowing a depth region up to 5/10a to carry 90% or more of the catalyst powder, so that a high PM removal performance as desired is obtained. Meanwhile, supposing that the average pore size of the partition wall 3 of the honeycomb substrate 1 is A µm, a particle size (D90) of 0.92A µm or less makes it difficult for coarse catalyst particles to close the pores of the wall surface of 3 facing the exhaust gas inflow cell side of the partition wall 3 of the honeycomb substrate 1 in the subsequent slurry applying step, and thereby an excessive increase in back pressure and an excessive decrease in engine output can be suppressed.

Supposing that the average pore size of the partition wall 3 is A µm, the catalyst powder in the catalyst slurry is preferably ground at the end of the catalyst slurrying step so that the particle size at 90 vol% cumulative distribution (D90) satisfies the aforementioned conditions and further the particle size at 50 vol% cumulative distribution (D50) is 0.15A µm to 0.35A µm. For allowing the shallow region of the partition wall 3 to concentrically carry the catalyst 2, it is more preferable that the aforementioned catalyst powder be ground so that the particle size (D50) is 0.20A µm to 0.30A µm.

In order to obtain such a ground product having a desired particle size distribution, the operational conditions of the grinding device such as the rotational speed, the grinding time, and the filling amount (the amount used) of the catalyst material may be appropriately adjusted, in consideration of the amount of the catalyst material to be used, the grinding device, and selection of the grinding medium such as material and bead diameter.

### (Catalyst slurry applying step)

Next, the catalyst slurry 4 obtained is supplied from the end of the honeycomb substrate 1 to the inside, to coat or impregnate the honeycomb substrate 1 with the catalyst slurry 4, so that the catalyst composition is applied onto the honeycomb substrate 1. At this time, the catalyst composition may be single-layered or may be multi-layered so as to have two or more layers with an underlayer added to the lower layer. Since the catalyst slurry 4 containing the catalyst 2 is ground as above to have a predetermined particle size distribution, the catalyst 2 can be concentrically attached to at least the shallow surface of the partition wall 3 of the honeycomb substrate 1 by supplying the catalyst slurry 4 to the honeycomb substrate 1.

At this time, supposing that the average pore size of the partition wall 3 is A µm, the material powder of the catalyst 2 in the catalyst slurry 4 is ground in the catalyst slurrying step so that the particle size at 90 vol% cumulative distribution (D90) is 0.5A µm to 0.92A µm. Therefore, the catalyst 2 can be carried concentrically in the shallow portion from the surface of the cell wall on the exhaust gas inflow cell side of the honeycomb substrate 1, without changing the conventional application conditions or immersion conditions, and 65% or more of the total mass of the catalyst 2 is present in a depth region up to 2/10a from the wall surface.

As required, operations such as increasing or decreasing the amount of the catalyst slurry 4 containing the catalyst 2 to be used, increasing or decreasing the time to immerse the honeycomb substrate 1, performing assist pressurization or assist depressurization from the exhaust gas inflow cell side or outflow cell side of the honeycomb substrate 1 during application, and increasing or decreasing the air blow pressure during application after immersion can be applied.

### (Heating step)

Thereafter, the honeycomb substrate 1 obtained in the catalyst slurry applying step is heated, thereby allowing the partition wall 3 of the honeycomb substrate 1 to carry the catalyst 2. The heating herein may be performed according to known conditions in this industry and is not specifically limited but can be performed, for example, at 450 to 600°C for 0.5 to 2 hours. As a heating device, a known heating device such as an electric furnace and a gas furnace can be used.

Further, the honeycomb substrate 1 is preferably dried between the catalyst slurry applying step and the heating step. The drying herein may be performed according to known conditions in this industry and is not specifically limited but can be performed, for example, at 150 to 200°C for 0.25 to 1 hour. As a heating device, a known heating device such as an electric furnace and a gas furnace can be used.

An exhaust gas purifying filter in which 65% or more of the total mass of the catalyst 2 carried by the honeycomb substrate 1 is present in a depth region ("region on the inflow cell side") from the surface of the partition wall 3 facing exhaust gas inflow cells up to 2/10a with reference to the wall thickness a is produced by performing the aforementioned steps.

Meanwhile, in Patent Literature 4 above, the liquid impregnation step is performed as a pretreatment before the catalyst slurry immerse step, and the pores of the partition wall of the honeycomb substrate are impregnated with a liquid such as water free from catalysts by immersing the honeycomb substrate in the liquid. It is disclosed that, since the liquid such as water is present inside the pores on the partition wall discharge cell side in the pretreated honeycomb substrate to close the pores, infiltration of the catalyst slurry into the pores of the partition wall, when being immersed in the catalyst slurry, is suppressed, and the catalyst slurry is mostly attached to the surface of the aforementioned partition wall. Further, it is disclosed that, in the following catalyst slurry applying step, the end face on the gas inflow side of the honeycomb substrate impregnated with water or the like in advance is impregnated with the catalyst slurry, the end face on the gas outflow side is suctioned, then an excess amount of the catalyst slurry is discharged, and thereby the catalyst slurry can be applied to at least a region on the inflow cell side of the honeycomb substrate.

However, Examples of Patent Literature 4 do not show the results of a performance test using the catalyst obtained, and it is therefore impossible to determine whether or not a honeycomb catalyst having a structure in which a catalyst is carried as intended is obtained. In the first place, the steps of such catalyst preparation are complicated and time-consuming, and the production cost also increases.

### 3. Method for purifying exhaust gas

Since the exhaust gas purifying filter 1 (CSF) of this embodiment described above comprises at least the honeycomb substrate 1 having the porous partition wall 3 configured to capture particulates (PM) such as soot in exhaust gas emitted from diesel engines or the like, and the catalyst 2 carried by the honeycomb substrate 1 for burning and removing particulates captured by the partition wall 3 of the honeycomb substrate 1 and deposited in the cells, it is possible to efficiently purify exhaust gas containing a large amount of soot.

That is, when the CSF of this embodiment is provided on an exhaust gas flow path of a diesel engine, particulates (PM) such as soot in exhaust gas flow into the inflow cell side of the partition wall 3 of the honeycomb substrate 1 to be captured. It also depends on the size, the use conditions, and the like of the honeycomb substrate 1, but PM generally tends to be accumulated on the far side of the closed cells, and a large amount of PM tends to be captured around cells at the end on the exhaust gas inflow side.

In this way, PM is mostly deposited in the region on the inflow cell side. Therefore, in the CSF of this embodiment carrying the catalyst 2 in the region on the inflow cell side, PM is first captured at a shallow position of the partition wall 3 on the exhaust gas inflow side, and thus PM is efficiently burned and removed, since the catalyst 2 is carried concentrically in the shallow portion from the surface of the cell wall on the exhaust gas inflow side of the honeycomb substrate 1, and 65% or more of the total mass of the catalyst 2 to be carried is present in a depth region from the surface of the partition wall 3 facing exhaust gas inflow cells up to 2/10a with reference to the wall thickness a.

Further preferably, the honeycomb substrate 1 in which 95% or more of the total mass of the catalyst carried by the honeycomb substrate 1 is contained in a depth region from the surface of the partition wall 3 facing exhaust gas inflow cells up to a wall thickness of 5/10a with reference to the wall thickness a is used. Thereby, even if the amount of PM to be deposited increases, the catalyst 2 present at a deeper position is involved in the combustion of PM, thereby making it possible to sufficiently burn and remove PM. Then, such a CSF achieves a performance with a PM removal performance of 40% or more, the PM removal performance being measured when the honeycomb substrate 1 is provided to allow 7.5 g/L of PM per unit volume to deposit thereon and is maintained at 600°C for 10 minutes for combustion.

The exhaust gas purifying filter 1 (CSF) carrying the catalyst for combustion of carbon materials on the partition wall 3 can be used as a joint connected with a plurality of other DOFs, DPFs, and the like using honeycomb substrates 1 by their side surfaces to each other.

Further, the exhaust gas purifying filter 1 (CSF) can be disposed on a flow path of exhaust gas in combination with another oxidation catalyst or an SCR catalyst to purify exhaust gas.

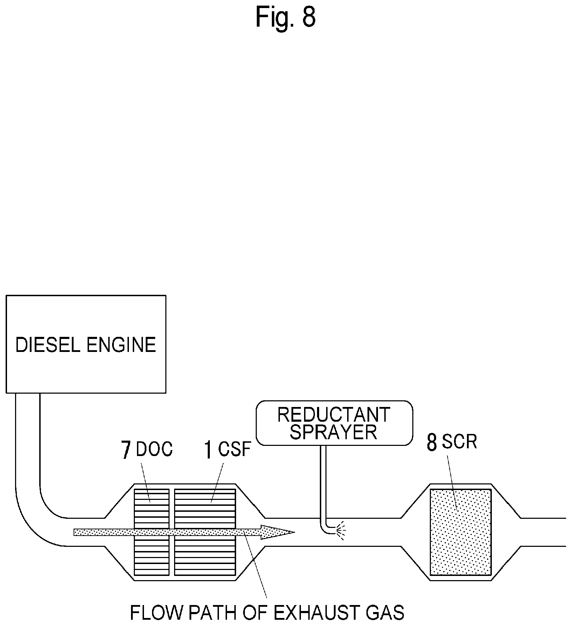

That is, as shown in Figure 8, an exhaust gas purification device in which the exhaust gas purifying filter 1 (CSF: catalyzed combustion filter) including a specific oxidation catalyst (DOC) containing a precious metal component for oxidizing nitrogen oxide (NO), and a precious metal component for capturing, and burning (oxidizing) and removing particulates (PM) in exhaust gas, a reductant sprayer configured to supply a reductant selected from urea components or ammonia components, and a selective reduction catalyst (SCR) free from precious metals and configured to reduce and remove nitrogen oxide (NOx) by contact with the reductant are disposed in this order from the upstream side of the exhaust gas flow path can be configured for use. In this way, when the DOC is disposed in the previous stage, so that NO is oxidized into NO₂ in advance, the CSF can further oxidize NO which could not be oxidized by the DOC into NO₂, even in the case where a large amount of NO is emitted.

Further, based on the exhaust gas purification catalyst device (DOC + CSF + SCR), an exhaust gas purification catalyst device further incorporating a DOC after the CSF (DOC + CSF + DOC + SCR) can be configured, or an ammonia oxidation catalyst (AMOX) can be further disposed after the SCR, so that the exhaust gas purification performance can be further enhanced.

### Examples

Hereinafter, the features of the present invention will be described further specifically by way of Experimental Examples, Examples, and Comparative Examples, but the present invention should not be construed as being limited based on these. Further, materials, used amounts, ratios, treatment contents, treatment procedures, and the like shown below in Examples can be appropriately changed without departing from the spirit of the present invention. The type of honeycomb substrate, the particle size and distribution of catalyst samples, and the performance evaluation test using the catalysts were as follows.

### (Honeycomb substrate)

As a honeycomb substrate, a columnar carrier of wall flow type with 300 cells, 16 mil, and diameter 143.8 × length 127 mm was used. A honeycomb substrate with an average pore size of a partition wall falling within the range of 5 µm to 25 µm can be preferably used. Here, the average pore size of the partition wall of the honeycomb substrate is measured by mercury porosimetry, and the thus measured value is taken as a reference value A1 µm. The honeycomb substrate used in Examples below satisfied 10 ≤ A1 ≤ 20.

### (Particle size distribution of catalyst slurry)

The particle size (D90) and particle size (D50) of each catalyst were measured using a laser diffraction particle size distribution analyzer (SALD-3100, available from SHIMADZU CORPORATION), and the particle size distribution was evaluated based on the volume reference value.

### (Catalyst distribution)

For the catalyst distribution in the honeycomb substrate, the amount of catalyst present in a depth region up to 2/10a with reference to the wall thickness a and the amount of catalyst present in a depth region up to 5/10a were each determined by dividing a 200-fold cross-sectional bright-field image of the partition wall obtained by observation at an acceleration voltage of 20 kV using a scanning electron microscope (SEM: Ultra55, available from Carl Zeiss AG) into 10 equal parts from the exhaust gas inflow side to the exhaust gas outflow side of the partition wall and integrating the areas of regions where the aforementioned catalyst was present.

### (Catalyst performance test)

The exhaust gas purifying filter prepared was provided within an air exhaust tube of a 3-L diesel engine, and engine exhaust gas was circulated therein. Thereby, 15 g of PM was deposited on the exhaust gas purifying filter (volume of the exhaust gas purifying filter: 2 L; and the amount of PM carried per unit volume of the exhaust gas purifying filter: 7.5 g/L), then the temperature at the center of the filter was adjusted to 600°C by controlling the engine, the state of 600°C was maintained for 10 minutes, and thereafter the amount of PM was measured. For the PM removal performance, a decrement from the deposited amount was calculated.

Further, as CO and HC purification performance tests, the exhaust gas purifying filter prepared was provided within an air exhaust tube of a 3-L diesel engine, and engine exhaust gas at 170°C to 250°C was circulated therein, so that the CO removal performance and the THC removal performance were determined.

### [Example 1]

### (Catalyst preparation)

100 parts by mass of raw material powder containing cerium oxide, zirconium oxide, lanthanum oxide, and yttrium oxide at a mass ratio of 37:46:5:5 was mixed in a liquid bath into which 50 parts by mass of an aqueous solution containing chlorinated platinum acid as a raw material of the Pt component and palladium nitrate as a raw material of the Pd component (with a mass ratio of Pt to Pd of 5:2) had been put, and the inorganic oxides were impregnated with the precious metal component, followed by firing at 600°C for 30 minutes, to obtain a catalyst (catalyst powder) with a precious metal component having the composition shown in Table 1 carried on the inorganic oxides.

To 100 parts by mass of the catalyst powder obtained, 300 parts by mass of water was added and mixed, to slurry the catalyst powder. Thereafter, the catalyst slurry obtained was put into a ball mill (product name: BM40L, available from Makino Corporation), and the conditions were adjusted so that the particle size (D90) fell within the range of 0.75A1 µm to 0.92A1 µm with respect to the average pore size A1 µm of the partition wall, followed by wet grinding the catalyst powder in the catalyst slurry. After grinding for 50 minutes, catalyst powder was sampled from the catalyst slurry obtained, and the particle size (D90) of the catalyst powder in the catalyst slurry was measured. As a result, it was confirmed that the particle size (D90) was 0.85 times the average pore size A1 µm of the partition wall. That is, a catalyst slurry of Example 1 containing catalyst powder with a particle size (D90) of 0.85A1 µm was obtained. Further, the particle size (D50) of the catalyst powder in the catalyst slurry was measured. As a result, the particle size (D50) was 0.23 times the average pore size A1 µm of the partition wall. Table 1 shows the numerical value of (particle size (D90)/average pore size of partition wall), and the numerical value of (particle size (D50)/average pore size of partition wall), respectively.

Subsequently, a columnar honeycomb substrate (300 cells, 16 mil, and diameter 143.8 × length 127 mm) having a porous partition wall provided in a lattice pattern and a plurality of cells surrounded by the partition wall and extending in the axis direction was impregnated with the catalyst slurry obtained, so as to be coated in an amount of catalyst carried of 15.1 g/L per volume of the carrier. Thereafter, it was dried at 150°C for 1 hour and fired at 500°C for 2 hours in the atmosphere, to obtain an exhaust gas purifying filter of Example 1 shown in Table 1.

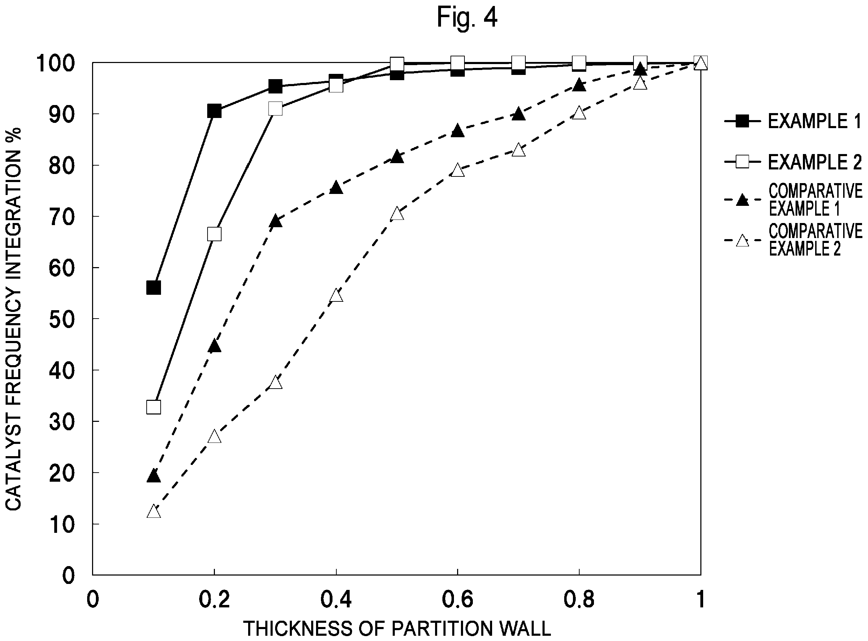

In the exhaust gas purifying filter of Example 1 obtained, the distribution of the catalyst within the partition wall was investigated. The graph in Figure 4 shows the amount of catalyst integrated from the wall surface on the exhaust gas inflow side to the wall surface on the exhaust gas outflow side. Here, "partition wall thickness 0" indicates the position of the wall surface on the exhaust gas inflow side, and the "partition wall thickness 1" indicates the position of the wall surface on the exhaust gas outflow side. The integration of the catalyst distribution was performed with the wall surface on the gas inflow side taken as "0" and the wall surface on the gas outflow side taken as "100".

As described above, the catalyst distribution was calculated by dividing a sectional image of the partition wall obtained by SEM into 10 equal parts from the exhaust gas inflow side to the exhaust gas outflow side and integrating the areas of the aforementioned catalyst.

In the exhaust gas purifying filter of Example 1, 91% of the total mass of the catalyst was carried in a depth region from the surface of the partition wall facing exhaust gas inflow cells up to 2/10a with reference to the wall thickness a, and 98% of the total mass of the catalyst was carried in a depth region from the wall surface up to 5/10a therewith.

### (Performance test)

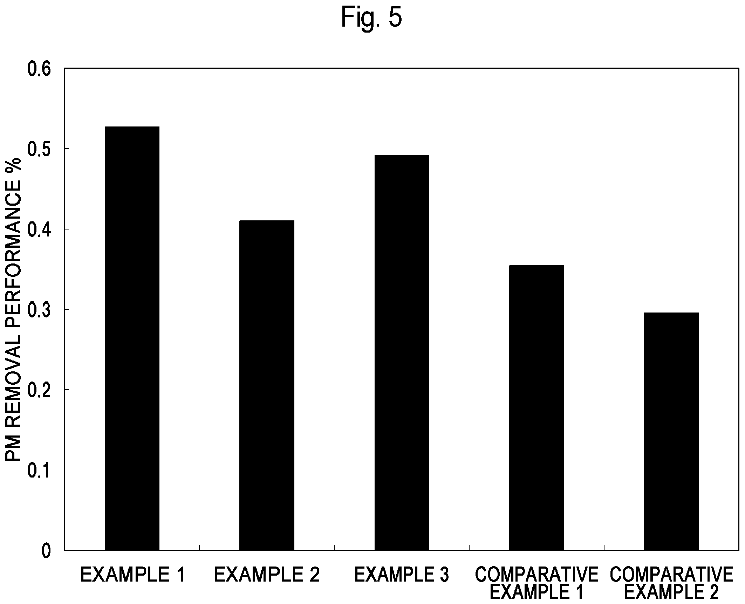

The exhaust gas purifying filter of Example 1 was provided within an air exhaust tube of a 3-L diesel engine, and engine exhaust gas was circulated therein. Thereby, a predetermined amount of PM was deposited, as described above, then the filter was heated and maintained at a predetermined temperature by controlling the engine, and the PM removal performance was determined. The PM removal performance of the exhaust gas purifying filter of Example 1 was 53%, as shown in Figure 5.

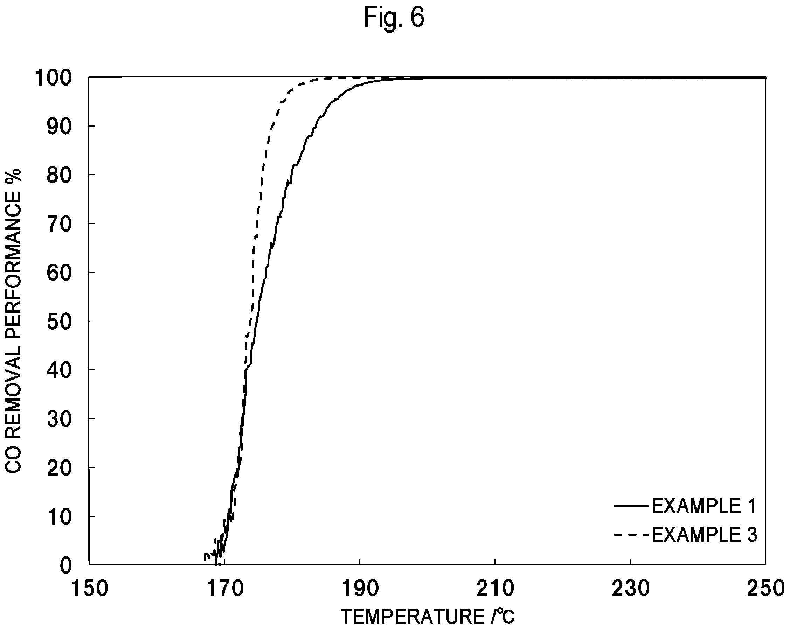

Further, the CO removal performance and the THC removal performance were determined in the same manner as above, and the graphs of Figures 6 to 7 show the results.

### [Example 2]

In Example 1, the conditions for grinding the catalyst were changed. That is, a catalyst slurry was obtained in the same manner as in Example 1 except that the grinding time was changed to 60 minutes so that the particle size (D90) fell within the range of 0.5A1 µm to 0.67A1 µm with respect to the average pore size A1 µm of the partition wall. The particle size (D90) of the catalyst powder in the catalyst slurry obtained, as measured in the same manner as in Example 1, was confirmed to be 0.65 times the average pore size A1 µm of the partition wall. That is, a catalyst slurry of Example 2 containing catalyst powder with a particle size (D90) of 0.65A1 µm was obtained. Table 1 shows the numerical value of (particle size (D90)/average pore size of partition wall), and the numerical value of (particle size (D50)/average pore size of partition wall).

Subsequently, an exhaust gas purifying filter of Example 2 shown in Table 1 was obtained in the same manner as in Example 1 except that the catalyst slurry of Example 2 was used instead of the catalyst slurry of Example 1. The graph of Figure 4 shows the results of investigating the distribution of the catalyst within the partition wall in the same manner as in Example 1.

In the exhaust gas purifying filter of Example 2, 67% of the total mass of the catalyst was carried in a depth region from the surface of the partition wall facing exhaust gas inflow cells up to 2/10a with reference to the wall thickness a, and 100% of the total mass of the catalyst was carried in a depth region from the wall surface up to 5/10a therewith.

A performance test was performed using the exhaust gas purifying filter of Example 2. As a result, the PM removal performance was 41%, as shown in Figure 5.

### [Example 3]

Aluminum oxide was added to the raw material powder used in Example 1, to change the composition ratio of the inorganic oxide. That is, a catalyst (catalyst powder) and a catalyst slurry with a precious metal component having the composition shown in Table 1 carried on the inorganic oxides were obtained in the same manner as in Example 1 except that 100 parts by mass of raw material powder containing cerium oxide, zirconium oxide, aluminum oxide, lanthanum oxide, and yttrium oxide at a mass ratio of 24:30:33:3:3 was mixed with 200 parts by mass of an aqueous solution containing chlorinated platinum acid as a Raw material of the Pt component and palladium nitrate as a raw material of the Pd component (with a mass ratio of Pt to Pd of 5:2), and the inorganic oxides were impregnated with the precious metal component.

Subsequently, an exhaust gas purifying filter of Example 3 shown in Table 1 was obtained in the same manner as in Example 1 except that a catalyst slurry of Example 3 was used instead of the catalyst slurry of Example 1.

The catalyst distribution in the exhaust gas purifying filter of Example 3 was investigated. As a result, 91% of the total mass of the catalyst was carried in a depth region from the surface of the partition wall facing exhaust gas inflow cells up to 2/10a with reference to the wall thickness a, and 98% of the total mass of the catalyst was carried in a depth region from the wall surface up to 5/10a therewith, in the same manner as in Example 1.

A performance test was performed using the exhaust gas purifying filter of Example 3. As a result, the PM removal performance was 49%, as shown in Figure 5.

Further, the CO removal performance and the THC removal performance were determined in the same manner as above, and the graphs of Figures 6 to 7 show the results.

In these results, the PM removal performance in the exhaust gas purifying filter of Example 3 slightly fell below that of Example 1, but the removal performances of CO and HC that are exhaust gas components were improved, as shown in Figures 6 to 7, as compared with those in Example 1.

### [Comparative Example 1]

In Example 1, the conditions for grinding the catalyst were changed. That is, a catalyst slurry was obtained in the same manner as in Example 1 except that the time of the powder treatment was changed to 120 minutes so that the particle size (D90) fell within the range of 0.25A1 µm to 0.42A1 µm with respect to the average pore size A1 µm of the partition wall. The particle size (D90) of the catalyst powder in the catalyst slurry obtained, as measured in the same manner as in Example 1, was confirmed to be 0.34 times the average pore size A1 µm of the partition wall. That is, a catalyst slurry of Comparative Example 1 containing catalyst powder with a particle size (D90) of 0.34A1 µm was obtained. Table 1 shows the numerical value of (particle size (D90)/average pore size of partition wall), and the numerical value of (particle size (D50)/average pore size of partition wall), respectively.

Subsequently, an exhaust gas purifying filter of Comparative Example 1 shown in Table 1 was obtained in the same manner as in Example 1 except that a catalyst slurry of Comparative Example 1 was used instead of the catalyst slurry of Example 1. The graph of Figure 4 shows the results of investigating the distribution of the catalyst within the partition wall in the same manner as in Example 1.

The catalyst distribution in the exhaust gas purifying filter of Comparative Example 1 was investigated. As a result, 45% of the total mass of the catalyst was carried in a depth region from the surface of the partition wall facing exhaust gas inflow cells up to 2/10a with reference to the wall thickness a, and 82% of the total mass of the catalyst was carried in a depth region from the wall surface up to 5/10a therewith.

A performance test was performed using the exhaust gas purifying filter of Comparative Example 1. As a result, the PM removal performance was 35%, as shown in Figure 5, which was confirmed to be significantly lower than that in Examples 1 to 3.

### [Comparative Example 2]

In Example 1, the conditions for grinding the catalyst were changed. That is, a catalyst slurry was obtained in the same manner as in Example 1 except that so that the particle size (D90) fell within the range of 0.01A1 µm to 0.17A1 µm with respect to the average pore size A1 µm of the partition wall, the grinding time was changed to 1200 minutes. The particle size (D90) of the catalyst powder in the catalyst slurry obtained was measured and was confirmed to be 0.11 times the average pore size A1 µm of the partition wall. That is, a catalyst slurry of Comparative Example 2 containing catalyst powder with a particle size (D90) of 0.11A1 µm was obtained. Table 1 shows the numerical value of (particle size (D90)/average pore size of partition wall), and the numerical value of (particle size (D50)/average pore size of partition wall), respectively.

Subsequently, the exhaust gas purifying filter of Comparative Example 2 shown in Table 1 was obtained in the same manner as in Example 1 except that the catalyst slurry of Comparative Example 2 was used instead of the catalyst slurry of Example 1. The graph of Figure 4 shows the results of investigating the distribution of the catalyst within the partition wall in the same manner as in Example 1.

The catalyst distribution in the exhaust gas purifying filter of Comparative Example 2 was investigated. As a result, 27% of the total mass of the catalyst was carried in a depth region from the surface of the partition wall facing exhaust gas inflow cells up to 2/10a with reference to the wall thickness a, and 71% of the total mass of the catalyst was carried in a depth region from the wall surface up to 5/10a therewith.

A performance test was performed using the exhaust gas purifying filter of Comparative Example 2. As a result, the PM removal performance was 30%, as shown in Figure 5, which was a value further lower than that in Comparative Example 1.

**[Table 1]**

| | D90/average pore size of partition wall | D50/average pore size of partition wall | Amount of catalyst (g/L) | Pt (mass%) | Pd (mass%) | Cerium oxide (mass%) | Zirconium oxide (mass%) | Aluminum oxide (mass%) | Lanthanum oxide (mass%) | Yttrium oxide (mass%) |
|---|---|---|---|---|---|---|---|---|---|---|
| Example 1 | 0.85 | 0.23 | 15.1 | 5 | 2 | 37 | 46 | 0 | 5 | 5 |
| Example 2 | 0.65 | 0.19 | 15.1 | 5 | 2 | 37 | 46 | 0 | 5 | 5 |
| Example 3 | 0.85 | 0.23 | 15.1 | 5 | 2 | 24 | 30 | 33 | 3 | 3 |
| Comparative Example 1 | 0.34 | 0.12 | 15.1 | 5 | 2 | 37 | 46 | 0 | 5 | 5 |
| Comparative Example 2 | 0.11 | 0.05 | 15.1 | 5 | 2 | 37 | 46 | 0 | 5 | 5 |

### "Evaluation results"

The following can be seen from Table 1 and Figures 5 to 7.

That is, in the exhaust gas purifying filter of Example 1, zirconium oxide-containing oxides were used, the particle size (D90) of the catalyst powder in the catalyst slurry was 0.85A1 µm, 91% of the total mass of the catalyst was carried in a depth region from the surface of the partition wall facing exhaust gas inflow cells up to 2/10a with reference to the wall thickness a, and 98% of the total mass of the catalyst was carried in a depth region from the wall surface up to 5/10a therewith. In the exhaust gas purifying filter of Example 1 with such a configuration, the PM removal performance was 53%, as shown in Figure 5, yielding a higher result than in Comparative Example 1 and Comparative Example 2 by 10 points or more.

Further, in the exhaust gas purifying filter of Example 2, the particle size (D90) of the catalyst powder in the catalyst slurry was 0.65A1 µm, 67% of the total mass of the catalyst was carried in a depth region from the surface of the partition wall facing exhaust gas inflow cells up to 2/10a with reference to the wall thickness a, and 100% of the total mass of the catalyst was carried in a depth region from the wall surface up to 5/10a. In the exhaust gas purifying filter of Example 2 with such a configuration, the PM removal performance was 41%, as shown in Figure 5, yielding a higher result than in Comparative Example 1 and Comparative Example 2 by 6 points or more.

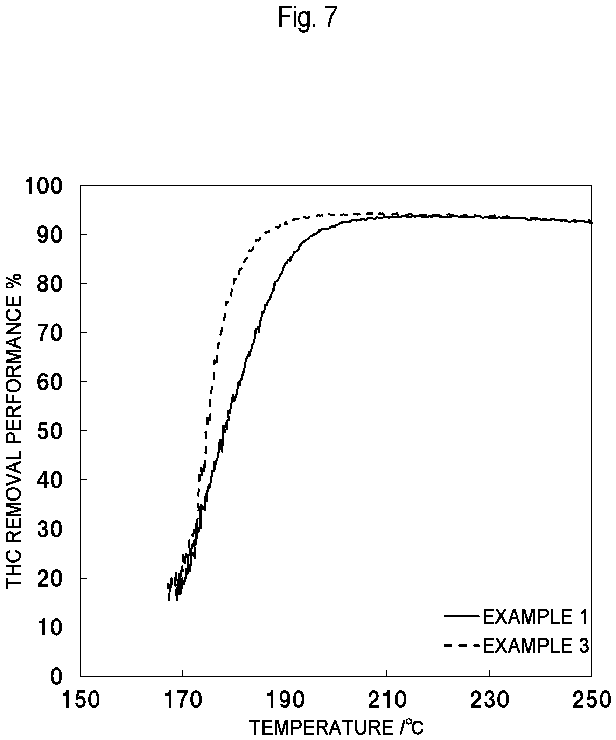

Further, in the exhaust gas purifying filter of Example 3, the catalyst distribution was the same as in Example 1, the PM removal performance was 49%, as shown in Figure 5, yielding a higher result than in Comparative Example 1 and Comparative Example 2 by 10 points or more. Further, as is obvious from Figures 6 and 7, the exhaust gas purifying filter of Example 3 was obtained by adding a predetermined amount of aluminum oxide to the zirconium oxide-containing inorganic oxides, and it is understood that the removal performances of CO and HC that are exhaust gas components were improved as compared with those in Example 1.

In the exhaust gas purifying filters of Examples 1 to 3 above, the grinding was performed so that the particle size (D90) of the catalyst powder in the catalyst slurry fell within the range of 0.5A1 µm to 0.92A1 µm with respect to the average pore size A1 µm of the partition wall. Therefore, the catalyst powder was carried concentrically in a shallow portion from the surface of the cell wall on the exhaust gas inflow side of the honeycomb substrate, and 65% or more of the total mass of the catalyst was present in a depth region from the surface of the partition wall facing exhaust gas inflow cells up to 2/10a with reference to the wall thickness a.

In contrast, in Comparative Example 1, the particle size (D90) of the catalyst powder in the catalyst slurry was as small as 0.34A1 µm with respect to the average pore size A1 µm of the partition wall. Therefore, only 45% of the total mass of the catalyst was carried in a depth region from the surface of the partition wall facing exhaust gas inflow cells up to 2/10a with reference to the wall thickness a, and only 82% of the total mass of the catalyst was carried in a depth region from the wall surface up to 5/10a therewith. As a result, the PM removal performance was as low as 35%.

Likewise, in Comparative Example 2, the particle size (D90) of the catalyst powder in the catalyst slurry was 0.11A1 µm, which was further smaller. Therefore, only 27% of the total mass of the catalyst was carried in a depth region from the surface of the partition wall facing exhaust gas inflow cells up to 2/10a with reference to the wall thickness a, and only 71% of the total mass of the catalyst was carried in a depth region from the wall surface up to 5/10a therewith. As a result, the PM removal performance was 30%, which was further lower than in Comparative Example 1.

It turned out from above that, when grinding is performed so that the particle size (D90) of the catalyst powder in the catalyst slurry at the end of the catalyst slurrying step is 0.5A1 µm or more, preferably 0.65A1 µm or more, with respect to the average pore size A1 µm of the partition wall, 65% or more of the total mass of the catalyst can be carried in a depth region from the surface of the partition wall facing exhaust gas inflow cells of the honeycomb substrate up to 2/10a with reference to the wall thickness a, and 95% or more of the total mass of the catalyst can be carried in a depth region from the wall surface up to 5/10a therewith, thereby enabling the PM removal performance to be significantly improved, so that the PM removal performance can be 40% or more, for example.

### Industrial Applicability

The exhaust gas purifying filter of the present invention can be used for purification technology of NOx generated due to lean-burn, for example, including movable applications such as diesel vehicles, gasoline vehicles, and ships, and stationary applications such as power generators, and is particularly useful for purifying exhaust gas from diesel vehicles.

### Reference Signs List

- 100: Exhaust gas purifying filter (CSF)
- 1: Honeycomb substrate
- 2: CSF catalyst
- 3: Partition wall
- 4: Catalyst slurry
- 5: Pores
- 6: Exhaust gas
- 7: Oxidation catalyst (DOC)
- 8: Reduction catalyst (SCR)
- 9: Exhaust gas inflow cells
- i: Exhaust gas inflow side
- o: Exhaust gas outflow side

## Claims

1. An exhaust gas purifying filter, comprising at least a honeycomb substrate having a porous partition wall configured to capture particulates in exhaust gas, and a catalyst carried by the honeycomb substrate and configured to burn and remove the particulates captured by the partition wall of the honeycomb substrate and deposited within cells, wherein
the catalyst is carried concentrically in a shallow portion from the surface of the cell wall on the exhaust gas inflow side of the honeycomb substrate, and 65% or more of the total mass of the catalyst is present in a depth region from the surface of the cell wall of the honeycomb substrate up to 2/10a with reference to the wall thickness a of the partition wall.

2. The exhaust gas purifying filter according to claim 1, wherein
90% or more of the total mass of the catalyst is present in the depth region from the surface of the cell wall of the honeycomb substrate up to 2/10a with reference to the wall thickness a of the partition wall.

3. The exhaust gas purifying filter according to claim 1 or 2, wherein
95% or more of the total mass of the catalyst is present in a depth region from the surface of the cell wall of the honeycomb substrate up to 5/10a with reference to the wall thickness a of the partition wall.

4. The exhaust gas purifying filter according to any one of claims 1 to 3, wherein
the catalyst comprises: inorganic oxides containing one or more oxides selected from the group consisting of zirconium oxide and cerium oxide, and one or more oxides selected from the group consisting of lanthanum oxide, yttrium oxide, praseodymium oxide, and neodymium oxide; and a precious metal component containing Pt and/or Pd carried on the inorganic oxides.

5. The exhaust gas purifying filter according to claim 4, wherein
the inorganic oxides of the catalyst further contain aluminum oxide.

6. The exhaust gas purifying filter according to any one of claims 1 to 5, wherein the exhaust gas purifying filter has a removal performance of 40% or more, the removal performance being measured when the honeycomb substrate is provided on a flow path of the exhaust gas to allow 7.5 g/L of the particulates per unit volume to deposit thereon and is maintained at 600°C for 10 minutes for combustion.

7. The exhaust gas purifying filter according to any one of claims 1 to 6, wherein
the honeycomb substrate has an average pore size of the partition wall within a range of 5 µm to 25 µm.

8. A method for producing an exhaust gas purifying filter including at least a honeycomb substrate having a porous partition wall configured to capture particulates in exhaust gas, and a catalyst carried by the honeycomb substrate and configured to burn and remove the particulates captured by the partition wall of the honeycomb substrate and deposited within cells, the method comprising:
a catalyst slurrying step of slurrying the catalyst to prepare a catalyst slurry and including any one of mixing and grinding treatments x) to z) below;
a catalyst slurry applying step of supplying the catalyst slurry obtained from the end of the honeycomb substrate to the inside to apply the catalyst slurry inside the partition wall constituting the cells; and
a heating step of heating the honeycomb substrate to which the catalyst slurry has been applied to allow the partition wall of the honeycomb substrate to carry the catalyst, wherein
supposing that the average pore size of the partition wall is A µm, the catalyst slurry contains catalyst powder with a particle size at 90 vol% cumulative distribution (D90) of 0.5A µm to 0.92A µm at the end of the catalyst slurrying step:
x) mixing material powder of the catalyst with an aqueous medium, followed by wet grinding;
y) dry-grinding material powder of the catalyst, followed by mixing with an aqueous medium; and
z) dry-grinding material powder of the catalyst, followed by mixing with an aqueous medium and further wet grinding.

9. The method for producing an exhaust gas purifying filter according to claim 8, wherein
the catalyst powder has a particle size distribution with a particle size (D50) at 50 vol% cumulative distribution of 0.15A µm to 0.35A µm at the end of the catalyst slurrying step.

10. The method for producing an exhaust gas purifying filter according to claim 8 or 9, wherein
the honeycomb substrate has an average pore size of the partition wall within a range of 5 µm to 25 µm.
